# EUROPÄISCHE PATENTANMELDUNG

(11) **EP 1 935 530 A1**
(43) Veröffentlichungstag der Anmeldung: **25.06.2008**
(21) Anmeldenummer: 06026613.7
(22) Anmeldetag: 21.12.2006
(51) Int. Cl.: B22C 1/18, B22C 3/00, B22C 9/06, B28B 7/34

(54) **Verfahren zur Herstellung einer keramischen Formschale und Verwendung derselben**

(71) Anmelder: SIEMENS AKTIENGESELLSCHAFT, 80333 München (DE)
(72) Erfinder: Grote, Holger, 53121 Bonn (DE); Herz, Margarete, 45133 Essen (DE); Nikasch, Christian, 45478 Mühlheim an der Ruhr (DE)

(57) **Zusammenfassung**

Verfahren zur Herstellung einer keramischen Formschale (20) für Feingussbauteile, insbesondere für Turbinenbauteile, dadurch gekennzeichnet, dass die Formschale gegossen wird (21).

## Beschreibung

Die Erfindung betrifft ein Verfahren zur Herstellung einer keramischen Formschale für Feingussbauteile, insbesondere für Turbinenbauteile, sowie eine Verwendung derartiger Formschalen.

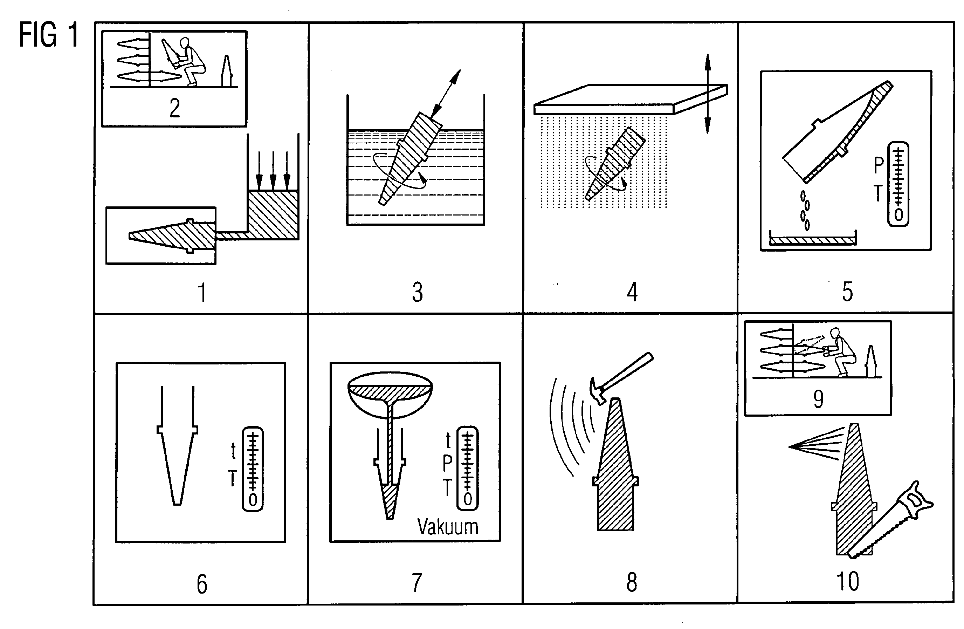

In der Dissertation von Anja Pfennig, "Mikrostruktur und Eigenschaften keramischer Formmassen im Feinguss", Erlangen 2001, wird ein Verfahren offenbart, in dem Feingussbauteile wie Turbinenschaufeln für industrielle Gasturbinen in einem mehrschrittigen Prozess hergestellt werden (siehe Fig. 1). Dieses spiegelt den gegenwärtigen Stand der Technik für das Herstellen keramischer Formschalen wider. Zunächst wird ein Urmodell aus Spezialwachsen hergestellt 1. Mehrere Wachsformen werden zu Modelltrauben zusammengesetzt 2. Auf die Wachsformen wird schichtweise durch Eintauchen 3 in ein Keramikbad feinkörniges Material aufgetragen und grobkörniges Material durch Besandung 4 eingebracht. Dies wird so lange durchgeführt, bis eine Schicht ausreichender Dicke entstanden ist. Anschließend wird das Wachs ausgeschmolzen 5. Die Keramikform wird in einem Ofen gebrannt 6, um die fertige Formschale (Negativ) zu erhalten. Danach kann der Gussvorgang 7 erfolgen. Nach dem Gießen 7 des Schmelzmaterials in die Keramikform, Erstarren der Schmelze und weiterem Abkühlen kann die Keramikform entfernt 8 werden. Dabei wird die Keramikform zerstört. Als letzte Schritte folgen das Trennen vom Angusssystem 9 und das Nachbearbeiten 10 des gegossenen Feingussbauteils zum Beispiel durch Sandstrahlen.

Ein kritischer Parameter für die Qualität des fertigen Bauteils ist die Maßhaltigkeit, die wesentlich durch das thermische, mechanische und mineralogische Verhalten des Formschalenmaterials bestimmt ist. Des Weiteren sind mehrere Teile, die im Herstellungsprozess Verwendung finden (Wachsform und Formschale), nicht wieder verwendbar, was größere Kosten verursacht.

Der Erfindung liegt die Aufgabe zugrunde, ein vorteilhaftes Verfahren zur Herstellung einer keramischen Formschale für Feingussbauteile zur Verfügung zu stellen.

Die Aufgabe wird durch ein Verfahren zur Herstellung einer keramischen Formschale für Feingussbauteile mit den Merkmalen des Anspruchs 1 gelöst. Die abhängigen Ansprüche enthalten vorteilhafte Weiterbildungen der Erfindung.

Erfindungsgemäß besteht die Lösung der Aufgabe in einem Verfahren zur Herstellung einer keramischen Formschale für Feingussbauteile, bei dem die Formschale gegossen wird.

Durch das Gießen der Formschale findet eine Verkürzung und Verringerung der Anzahl der Schritte zur Herstellung eines Feingussbauteils und damit verbunden eine Kosten- und Zeitaufwandreduktion statt.

Bei einer vorteilhaften Weiterbildung der Erfindung wird die keramische Formschale in einem Sol-Gel-Gießverfahren hergestellt. In einem Sol-Gel-Verfahren wird ein Sol, also eine kolloidale Lösung (fein im Lösungsmittel verteilte Teilchen) in ein Gel umgewandelt (bspw. durch sprunghaftes Abkühlen). Unter einem Gel ist ein feindispersives System mit wenigstens einer festen und einer flüssigen Phase zu verstehen, in dem die feste Phase ein dreidimensionales Netzwerk bildet, dessen Poren mit der Flüssigkeit gefüllt sind. Die kolloidale Lösung stellt dabei die flüssige Phase und das Gel die feste Phase des Gesamtsystems dar. Die Verwendung einer Gießtechnik nach dem Sol-Gel-Verfahren bietet eine bessere Formtreue (Maßhaltigkeit) des Bauteils. Durch das spezielle Gießverfahren kann außerdem eine Null-Schwindung realisiert werden (Aufhebung der positiven Sinterschwindung durch negative Schwindung auf Grund von Reaktionsmullit-Bildung), wodurch die Maßhaltigkeit der Formschale entscheidend verbessert wird.

Die Formschale braucht nach dem Gießen lediglich entformt und anschließend getrocknet zu werden. Dadurch entfällt das mehrmalige Tauchen, Besanden und Trocknen der einzelnen Schichten, wie es aus dem Stand der Technik bekannt ist.

Nach dem Trocknen wird die Formschale gesintert und anschließen nachbearbeitet. Durch den Sintervorgang wird der keramische Werkstoff verdichtet und rekristallisiert und erhält hierdurch seine Festigkeitseigenschaften.

Die fertige Formschale kann von innen beschichtet werden, so dass ein leichteres Entformen der Bauteile ermöglicht wird.

Eine weitere vorteilhafte Weiterbildung der Erfindung besteht darin, dass die Formschale mehrteilig gegossen wird. Dadurch wird ein zerstörungsfreies Entformen des Feingussbauteils ermöglicht.

In einer weiteren vorteilhaften Weiterbildung der Erfindung können zu der Formschale gehörige Gusskerne hergestellt werden. Dies ermöglicht ein Herstellen von Feingussteilen mit komplexer Geometrie.

Weiterhin können die Formschale und/oder die Gusskerne in Vorformen aus harteloxiertem Aluminium hergestellt werden. Diese sind verschleißarm und bieten eine hohe Wiederverwendbarkeit.

Die durch das erfindungsgemäße Verfahren hergestellten Formschalen und/oder Gusskerne können insbesondere wiederverwendet werden. Die Wiederverwendbarkeit ermöglicht eine Reduktion der Einwegteile im Herstellungsprozess, wie zum Beispiel die Wachsformen, die beim Herstellungsverfahren nach dem Stand der Technik verwendet werden. Die Möglichkeit der Wiederverwendung der Formschalen und/oder Gusskerne ermöglicht außerdem eine deutliche Kosten- und Zeitaufwandreduktion.

Die Werkstoff- und/oder Verarbeitungsparameter, wie etwa die Parameter der sprunghaften Abkühlung bei der Sol-Gel-Umwandlung oder die Temperatur beim späteren Sintern, haben einen wesentlichen Einfluss auf die späteren Eigenschaften der keramischen Formschale. Vorteilhafterweise werden die Werkstoff- und/oder Verarbeitungsparameter so eingestellt, dass die Formschale und/oder die Gusskerne eine Temperaturwechselbeständigkeit von mehr als dreißig Zyklen aufweisen. Die Temperaturwechselbeständigkeit ist ein Maß für die Wiederverwendbarkeit der Formschale und/oder der Gusskerne. Bei dreißig Zyklen ist eine Durchführung von dreißig Gießvorgängen mit derselben keramischen Formschale möglich.

Weiterhin können die Werkstoff- und/oder Verarbeitungsparameter so eingestellt werden, dass die Formschale und/oder die Gusskerne bei 1400°C eine thermische Dehnung von 6,5 bis 6,9 x 10⁻⁶K⁻¹ aufweisen. Die damit sehr niedrige thermische Dehnung gewährleistet eine gute Maßhaltigkeit der Formschale und/oder der Gusskerne.

Außerdem können die Werkstoff- und/oder Verarbeitungsparameter der Formschale und/oder der Gusskerne so eingestellt werden, dass die Formschale und/oder die Gusskerne bei 1400°C eine Heißbiegefestigkeit von 3 bis 6 MPa aufweisen. Beim Brennen der Keramik können Schmelzphasen entstehen, die Deformierungen verursachen können. Durch Erhöhung der Heißbiegefestigkeit kann die Deformation beim Brennen der Form minimiert werden.

In einer weiteren vorteilhaften Weiterbildung der Erfindung werden die Werkstoff- und/oder Verarbeitungsparameter so eingestellt, dass die Formschale und/oder die Gusskerne eine glattere Oberflächenstruktur aufweisen als gepresste keramische Formteile. Dadurch dass die Oberflächenstruktur der Formschale und/oder der Gusskerne glatter ist, kann auch eine glattere Oberflächenstruktur des fertigen Reingussteils erreicht werden.

Die Formschale und/oder die Gusskerne können bspw. aus Aluminiumoxid (Al₂O₃) und einem Aluminiumsilikat hergestellt werden. Derartige Werkstoffe erfüllen die oben genannten Anforderungen. Als einstellbare Werkstoffparameter können hierbei bspw. die Kristallstruktur des Al₂O₃, die Zusammensetzung des Aluminiumsilikates und/oder das Verhältnis von Al₂O₃ zu Aluminiumsilikat dienen. Insbesondere kann der Werkstoff einen Gewichtsanteil von mehr als ca. 50% Aluminiumoxid und weniger als ca. 50% Aluminiumsilikat aufweisen.

Ein besonders geeigneter Werkstoff kann bspw. aus Korund, also rhomboedrischem α-Al₂O₃, und Mullit als Aluminiumsilikat hergestellt werden.

Die Gusskerne können alternativ auch aus spritzgegossenem Kunststoff hergestellt werden, der nach dem Entformen ausgebrannt wird. Dies bietet Vorteile bei sehr komplexen oder feinen Bauteilinnengeometrien wie z.B. Kühlluftkanälen, die nicht mit wiederverwendbaren Kernen dargestellt werden können.

In noch einer vorteilhaften Weiterbildung der Erfindung wird die fertige keramische Formschale für das Herstellen von Feingussbauteilen, insbesondere von Turbinenbauteilen, verwendet.

Weitere Merkmale, Eigenschaften und Vorteile der Erfindung ergeben sich aus der nachfolgenden Beschreibung eines Ausführungsbeispiels unter Bezugnahme auf die beiliegende Figur.
- Fig.1: stellt das herkömmliche Gießverfahren nach dem Stand der Technik dar.
- Fig.2: stellt den Ablauf des erfindungsgemäßen Gießverfahrens von der Vorform bis zum fertigen Bauteil dar.

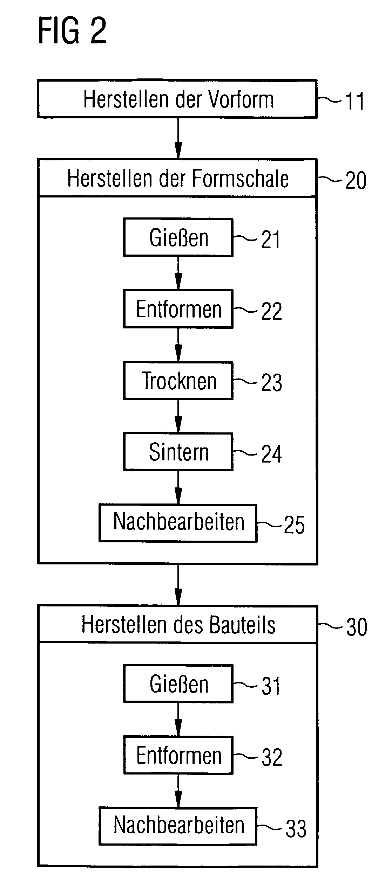

Fig. 2 zeigt die Herstellung eines Feingussbauteils nach dem erfindungsgemäßen Verfahren vom Herstellen der Vorform 11 bis zum Herstellen des Feingussbauteils 30 in einem Flussdiagramm.

An die Formschale wird die Anforderung gestellt, dass sie eine ausreichende Festigkeit sowohl im grünen (d.h. im ungebrannten) als auch gebrannten Zustand aufweisen soll. Dies ermöglicht eine gute Handhabung. Bei Prozessen an Luft muss eine gute Gasdurchlässigkeit gewährleistet sein. Weiterhin sollte sich die Formschale durch eine hohe Oberflächengüte auszeichnen. Je nach Erstarrungsart ist eine Kornfeinung im Facecoating erforderlich. Außerdem sollte die Formschale gute Separationseigenschaften besitzen. Ein niedriger Ausdehnungskoeffizient (< 100 x 10⁻⁷ K⁻¹) ist ebenfalls wünschenswert. Vorteilhaft ist auch eine hohe Temperaturwechselbeständigkeit. Weiterhin sollten eine gezielte Kornverteilung und ein gezielter Kornaufbau stattfinden. Eine geringe Benetzbarkeit mit Flüssigmetall sollte ebenfalls gegeben sein. Vorteilhaft sind auch eine hohe Wärmeleitfähigkeit, eine schnelle Wärmeabfuhr und hohe Gradienten. Bei Vakuumgussverfahren sollte die Formschale außerdem eine gute Beständigkeit im Vakuum (bei niedrigem Dampfdruck) aufweisen.

Die Herstellung besteht aus den Schritten Herstellung der Vorform 11, Herstellen der Formschale 20 und Herstellen des Bauteils 30. Das Herstellen der Formschale 20 gliedert sich in die Teilschritte Gießen 21, Entformen 22, Trocknen 23, Sintern 24 und Nacharbeit 25. Das Herstellen des Bauteils 30 gliedert sich in die Schritte Gießen 31, Entformen 32 und Nacharbeit 33.

Die Formgebung der Vorform basiert auf einem 3D-Modell des Feingussbauteils, in der die für den verwendeten Werkstoff bestimmte Schwindung berücksichtigt ist. Die Vorform kann zum Beispiel durch spanende Bearbeitung hergestellt werden. Sie kann auf der Innenseite harteloxiert sein, so dass ein geringer Verschleiß auftritt und die Form mehrfach wieder verwendet werden kann.

Bei der Herstellung der Formschale 20 findet zunächst der Gussvorgang 21 statt. Das erfindungsgemäß angewendete Gießverfahren ist ein Sol-Gel-Verfahren. Beim Sol-Gel-Verfahren erfolgt der Übergang vom flüssigen Sol zum keramischen Werkstoff jeweils über einen Gel-Zustand. Das Gel erhält Festkörpereigenschaften durch Überführung des Gels in einen oxidkeramischen Werkstoff. Dieser Übergang wird durch eine kontrollierte Wärmebehandlung unter Luft herbeigeführt.

Im vorliegenden Ausführungsbeispiel kommt ein Korund-Mullit-Werkstoff zum Herstellen der Formschale zur Anwendung, wobei der Formmasse noch die drei weiteren Bestandteile Kieselsäure (Si(OH)₄)), Wasser (H₂O und reaktive Tonerde zugemischt werden. Die Gewichtsanteile dieser Bestandteile betragen beim Korund als Aluminiumoxid zwischen zirka 55% und 70%, beim Mullit als Aluminiumsilikat zwischen zirka 30% und 45% und beim Wasser zwischen zirka 4% und 7%. Die Kieselsäure wird als Sol- bzw. kolloidale Lösung mit einem Gewichtsanteil von zwischen zirka 4% und 8% zugegeben. Der Anteil an reaktiver Tonerde beträgt zwischen zirka 15% und 30%.

Alle fünf Bestandteile werden in einem Mischvorgang zu einer Formmasse zusammengefügt und nachfolgend unter Vibration in eine Gießform vergossen. Die Gießform wird anschließend sprunghaft (ausgehend von Raumtemperatur) abgekühlt. Dadurch verfestigt sich die in der Formmasse als Sol enthaltene Kieselsäure zu einem Gel. Dabei wird auch die Formmasse insgesamt verfestigt.

Die durch dieses Verfahren hergestellte Formschale wird anschließend entformt 22. Im nächsten Schritt wird die vorgefertigte Formschale getrocknet 23, damit sich beim späteren Gießen des Bauteils keine Dampfblasen entwickeln.

Nach dem Trocknen 23 wird die Formschale einem Sinterprozess 24 unterzogen. Durch Sintern 24 bei einer bestimmten Temperatur findet eine Rekristallisierung des Formschalenwerkstoffs statt, wodurch seine Festigkeit erhöht wird. Im vorliegenden Ausführungsbeispiel wird die Formmasse bei einer Sintertemperatur im Bereich zwischen zirka 1300°C und zirka 1600°C gebrannt. Auf Grund dieser vergleichsweise niedrigen Brenntemperatur können sich in der Formmasse eingesetzte Faserverstärkungen befinden, so dass insgesamt eine faserverstärkte Keramik hergestellt werden kann.

Der letzte Schritt ist das Nacharbeiten 25 der fertigen keramischen Formschale. Hierbei werden zum Beispiel Grate, die durch Trennfugen in der Vorform entstanden sind, entfernt.

Wenn die keramische Formschale auf diese Weise fertig gestellt worden ist, erfolgt das Herstellen des Bauteils 30 durch Gießen 31. Das Bauteil kann bspw. aus einer Superlegierung auf Nickel- oder Kobaltbasis gegossen werden. Zuerst wird die flüssige Schmelze in die keramische Formschale gegossen. Nach einer Erstarrungs- und Abkühlungsphase wird das gegossene Bauteil entformt 32, wobei eine mehrteilige Form gewährleistet, dass auch Bauteile mit komplexer Geometrie hergestellt werden können. Im letzten Schritt erfolgt die Nacharbeit des Bauteils 33, zum Beispiel Entfernen der Grate, Wärmebehandlungen zum Erhöhen der Festigkeit, etc.

Außer Turbinenschaufeln können zum Beispiel auch Verdichterschaufeln mit dem erfindungemäßen Verfahren hergestellt werden.

## Patentansprüche

1. Verfahren zur Herstellung einer keramischen Formschale (20) für Feingussbauteile,
insbesondere für Turbinenbauteile,
**dadurch gekennzeichnet, dass**
die Formschale gegossen wird (21).

2. Verfahren nach Anspruch 1,
**dadurch gekennzeichnet, dass**
die Formschale (20) in einem Sol-Gel-Verfahren (21) hergestellt wird.

3. Verfahren nach Anspruch 2,
**dadurch gekennzeichnet, dass**
die Formschale nach dem Giessen (21) entformt (22) und anschließend getrocknet wird (23).

4. Verfahren nach Anspruch 3,
**dadurch gekennzeichnet, dass**
die Formschale nach dem Trocknen (23) gesintert (24) und anschließend nachbearbeitet wird (25).

5. Verfahren nach Anspruch 4,
**dadurch gekennzeichnet, dass**
die Formschale (20) im Rahmen der Nachbearbeitung (25) von innen beschichtet wird.

6. Verfahren nach einem der Ansprüche 1 bis 5,
**dadurch gekennzeichnet, dass**
die Formschale (20) mehrteilig gegossen wird.

7. Verfahren nach Anspruch 6,
**dadurch gekennzeichnet, dass**
zu der Formschale (20) gehörige Gusskerne hergestellt werden.

8. Verfahren nach einem der vorangehenden Ansprüche,
**dadurch gekennzeichnet, dass**
die Formschale (20) und/oder die Gusskerne in Vorformen aus harteloxiertem Aluminium hergestellt werden (21).

9. Verfahren nach einem der vorangehenden Ansprüche,
**dadurch gekennzeichnet, dass**
die Werkstoff- und/oder Verarbeitungsparameter der Formschale und/oder der Gusskerne so eingestellt werden, dass die Formschale und/oder die Gusskerne eine Temperaturwechselbeständigkeit von mindestens 30 Zyklen aufweisen bzw. aufweist.

10. Verfahren nach einem der vorangehenden Ansprüche,
**dadurch gekennzeichnet, dass**
die Werkstoff- und/oder Verarbeitungsparameter der Formschale und/oder der Gusskerne so eingestellt werden, dass die Formschale und/oder die Gusskerne bei 1400°C eine thermische Dehnung von 6,5 bis 6,9·10⁻⁶ K⁻¹ aufweisen bzw. aufweist.

11. Verfahren einem der vorangehenden Ansprüche,
**dadurch gekennzeichnet, dass**
die Werkstoff- und/oder Verarbeitungsparameter der Formschale und/oder der Gusskerne so eingestellt werden, dass die Formschale und/oder die Gusskerne bei 1400°C eine Heißbiegefestigkeit von 3 bis 6 MPa aufweisen bzw. aufweist.

12. Verfahren einem der vorangehenden Ansprüche,
**dadurch gekennzeichnet, dass**
die Werkstoff- und/oder Verarbeitungsparameter der Formschale und/oder der Gusskerne so eingestellt werden, dass die Formschale und/oder die Gusskerne eine glattere Oberflächenstruktur als gepresste keramische Formteile aufweisen bzw. aufweist.

13. Verfahren nach einem der vorangehenden Ansprüche,
**dadurch gekennzeichnet, dass**
die Formschale und/oder die Gusskerne aus einem Aluminiumoxid-Aluminiumsilikat-Werkstoff hergestellt werden bzw. wird.

14. Verfahren nach Anspruch 13,
**dadurch gekennzeichnet, dass**
die Formschale und/oder die Gusskerne aus einem Gewichtsanteil von mehr als zirka 50% Aluminiumoxid und weniger als zirka 50% Aluminiumsilikat hergestellt werden bzw. wird.

15. Verfahren nach Anspruch 14,
**dadurch gekennzeichnet, dass**
die Formschale und/oder die Gusskerne aus Korund als Aluminiumoxid und Mullit als Aluminiumsilikat hergestellt werden bzw. wird.

16. Verfahren nach Anspruch 7,
**dadurch gekennzeichnet, dass**
die Gusskerne aus spritzgegossenem Kunststoff hergestellt werden.

17. Verwendung einer keramischen Formschale, die nach einem der vorangehenden Ansprüche hergestellt ist, für das Herstellen von Feingussbauteilen (30), insbesondere von Turbinenbauteilen.
